# EUROPEAN PATENT APPLICATION

(11) **EP 3 222 871 A1**
(43) Date of publication of application: **27.09.2017**
(21) Application number: 15861620.1
(22) Date of filing: 18.11.2015
(51) Int. Cl.: F16D 65/02

(54) **DISC BRAKE DEVICE**

(30) Priority: 18.11.2014 JP 2014233810
(71) Applicant: Akebono Brake Industry Co., Ltd., Tokyo 103-8534 (JP)
(72) Inventor: MAEHARA Toshifumi, Tokyo 103-8534 (JP); NAKAMURA Hiroaki, Tokyo 103-8534 (JP)
(74) Representative: Grünecker Patent- und Rechtsanwälte PartG mbB
(86) International application number: PCT/JP2015/082426
(87) International publication number: WO 2016/080451

(57) **Abstract**

A disc brake device (10) having: a support (12); slide members (22) having a guide pin (24) and an anchor pin (26) respectively positioned at the inner side and the outer side of the support (12); and a caliper (30) supported by the slide members (22), and held such that the tangential force of an outer pad (52) is transmitted to a hook part (36). The caliper (30) is equipped with outer-side transmission surfaces (36d) that transmit braking torque generated by the outer pad (52) to the anchor pins (26), and inner-side transmission surfaces (32c) that transmit braking torque to the guide pins (24).

## Description

### [Technical Field]

The present invention relates to a disc brake apparatus.

### [Background Art]

As a disc brake apparatus incorporating a floating caliper in which braking torque of an outer pad is borne via pins which are fixed to a support member, disc brake apparatuses are known which are configured as disclosed in Patent Document 1 and Patent Document 2.

The disc brake apparatus disclosed in Patent Document 1 adopts a configuration in which an inner pad is supported by a support member and an outer pad is supported by anchor pins. The outer pad is supported by the anchor pins being inserted through through holes provided in lug portions of a pressure plate which makes up the outer pad. When the brakes are applied, pulling force is applied to the anchor pin which is situated on the rotor entrance side, while pushing force is applied to the anchor pin which is situated on the rotor exit side of the support member.

The disc brake apparatus disclosed in Patent Document 2 adopts a configuration in which an inner pad and an outer pad are both supported by anchor pins. The supporting form of the pads by the anchor pins is similar to that of the configuration disclosed in Patent Document 1, and the anchor pins are inserted through through holes provided in a pressure plate. In the disc brake apparatus configured in this way, when the brakes are applied, pulling force, pushing force or both the pulling force and the pushing force are applied to the inner pad and the outer pad.

### [Prior Art Literatures]

### [Patent Documents]

[Patent Document 1] JP-A-2012-172741
[Patent Document 2] WO2014/020941

### [Summary of the Invention]

### [Problem that the Invention is to Solve]

In both the disc brake apparatuses having the characteristics described above, the configuration of the support members is simplified, which can realize the reduction in both size and weight of the disc brake apparatuses as a whole.

In the disc brake apparatus disclosed in Patent Document 1, however, when the brakes are applied, the braking torque of the outer pad is borne by the anchor pins, and in the disc brake apparatus disclosed in Patent Document 2, the braking torque of both the inboard and outer pads is borne by the anchor pins. Due to this, there is a possibility that the anchor pins and the support member which supports the anchor pins are deformed. Then, in the event that the anchor pins and the support member are deformed, there is caused a change in caliper posture (a tilting phenomenon), leading to a problem that in the caliper whose posture is changed, the linings which make up the pads tend to be worn in an eccentric fashion.

Then, the invention has been made in these situations and an object thereof is to provide a disc brake apparatus which can prevent pins and a support member from being deformed while realizing the bearing of braking torque by the pins by solving the problem described above and simplifying the configuration of the support member.

### [Means for Solving the Problem]

The above object of the invention is achieved by the following configurations.
(1) A disc brake apparatus having; a support member; a slide member disposed along an axial direction of a rotor and having an inner slide portion on an inner side of the support member and an outer slide portion on an outer side of the support member; and a caliper which is held so that tangential force of an outer pad is transmitted to a claw portion and which is supported on the slide member, in which the caliper includes: an outer transmission surface which transmits braking torque generated in the outer pad to the outer slide portion; and an inner transmission surface which transmits the braking torque to the inner slide portion.
(2) The disc brake apparatus configured as described under (1) above, in which the slide member is made up of the inner slide portion and the outer slide portion which are separate members, and in which a constituent member of the inner slide portion and a constituent member of the outer slide portion are fastened together with the support member held therebetween.
   Even when the support member is formed thin, it is possible to ensure a sufficient fastening margin and fix the slide members, by this configuration.
(3) The disc brake apparatus configured as described under (1) or (2) above, in which the outer slide portion is made up, of a large diameter portion and a small diameter portion which are provided along an axial direction of the slide member, of the large diameter portion.
   By adopting this configuration, a distance can be made constant which is defined between a portion where the outer slide portion and the caliper are brought into contact with each other (that is, a connecting portion of the outer transmission surface with the outer slide portion) and the support member. Namely, even in the event that the pad wears, causing the caliper to deflect in the axial direction of the rotor, there is caused no change in the distance between the contact portion and the support member and the contact range thereof. Thus, the application of the braking torque can be maintained constant.
(4) The disc brake apparatus configured as described under any one of (1) to (3) above, in which the caliper is allowed to slide in the axial direction of the rotor via the inner slide portion, and in which the inner slide portion has a sleeve which is interposed between a sliding portion of the caliper and the inner slide portion.
   By adopting this configuration, it is possible to prevent the wear of the inner slide portion itself. In addition, in the event that the sleeve wears, only the sleeve can be replaced with another sleeve.
(5) The disc brake apparatus configured as described under any one of (1) to (4) above, in which a first gap is provided between the outer slide portion and the outer transmission surface, a second gap is provided between the inner slide portion and the inner transmission surface, and the second gap is set to be wider than the first gap.
   In the event that this configuration is adopted, braking torque is transmitted to the outer slide portion via the outer transmission surface, whereafter the braking torque is transmitted to the inner slide portion via the inner transmission surface.
(6) The disc brake apparatus configured as described under any one of (1) to (5) above, in which a first gap is provided between the outer slide portion and the outer transmission surface, a second gap is provided between the inner slide portion and the inner transmission surface, and in each of the first gap and the second gap, a gap situated on an exit side of the caliper where the rotor exits when it rotates is set to be wider than a gap situated on an entrance side where the rotor enters when it rotates.
   In the event that this configuration is adopted, when braking torque is inputted into the support member, the anchoring is executed from the pull anchor to the pull anchor and then to the push anchor in that order both on the outer side and the inner side of the support member.
(7) The disc brake apparatus configured as described under any one of (1) to (6) above, in which the outer transmission surface is an enclosing portion which encloses an outer circumference of the outer slide portion, and the enclosing portion encloses the outer circumference of the outer slide portion over a range of 180 degrees or greater including a braking torque transmission point to the outer slide portion.
   By adopting this configuration, even in the event that the enclosing portion is formed thin in thickness, the outer slide portion can be held by part of the caliper in an ensured fashion. Thus, a good holding performance of the caliper can be maintained.
(8) The disc brake apparatus configured as described under any one of (1) to (7) above, in which the outer pad is fastened to the claw portion.
   By adopting this configuration, the outer pad and the claw portion can be treated as an integral part. Thus, the braking torque which in inputted into the outer pad can be transmitted to the outer slide portion and the inner slide portion via the caliper.

### [Advantageous Effect of Invention]

According to the disc brake apparatus configured as described heretofore, even in the event that the configuration of the support member is simplified and that the torque bearing construction is adopted in which the braking torque is borne by the pins, it is possible to prevent the deformation of the pins and the support member. Thus, it is also possible to suppress the occurrence of eccentric wear that would otherwise be caused by the deformed pins or support member.

### [Brief Description of Drawings]

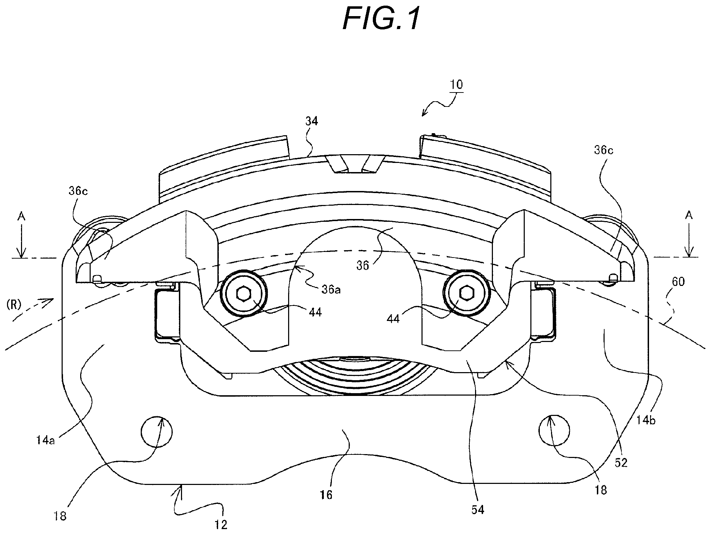

[Fig. 1] Fig. 1 is a front view of a disc brake apparatus according to an embodiment of the invention showing a front configuration thereof.

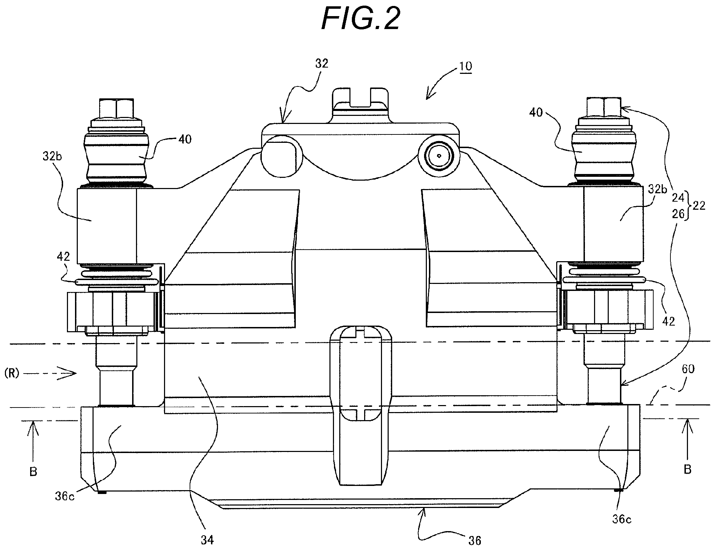

[Fig. 2] Fig. 2 is a plan view of the disc brake apparatus shown in Fig. 1 showing a top configuration thereof.

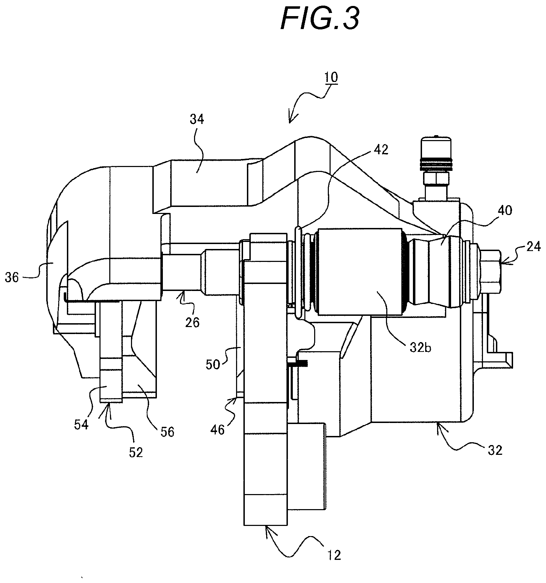

[Fig. 3] Fig. 3 is a right side view of the disc brake apparatus shown in Fig. 1 showing a right side configuration thereof.

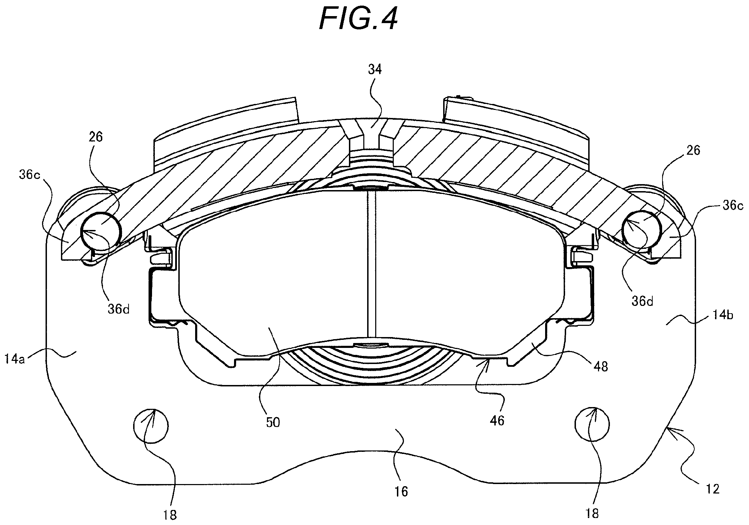

[Fig. 4] Fig. 4 is a sectional view of the disc brake apparatus according to the embodiment of the invention taken along a line B-B shown in Fig. 2.
[Fig. 5] Fig. 5 is an exploded perspective view of the disc brake apparatus shown in Fig. 1.
[Fig. 6] Fig. 6 is a sectional view of the disc brake apparatus according to the embodiment taken along a line A-A shown in Fig. 1,
[Fig. 7] Fig. 7 is a sectional view corresponding to the sectional view taken along the line A-A shown in Fig. 1, which shows a first modified example of the disc brake apparatus according to the embodiment of the invention
[Fig. 8] Fig. 8 is a sectional view corresponding to the sectional view taken along the line A-A shown in Fig. 1, which shows a second modified example of the disc brake apparatus according to the embodiment of the invention.

### [Mode for Carrying out the Invention]

Hereinafter, a disc brake apparatus according to an embodiment of the invention will be described in detail by reference to the drawings.

According to a basic configuration of a disc brake apparatus 10 of this embodiment, the disc brake apparatus 10 has a support member 12, slide members 22 which are supported by this support member 12, and a caliper 30 which is supported via the slide members 22.

The support member 12 is fixed to a vehicle body and plays a role of supporting the caliper 30 slidably. In this embodiment, the support member 12 is disposed between a cylinder portion 32 (an inboard body) and a claw portion 36 (an outboard body) of the caliper 30 (in other words, within a frame of the caliper 30).

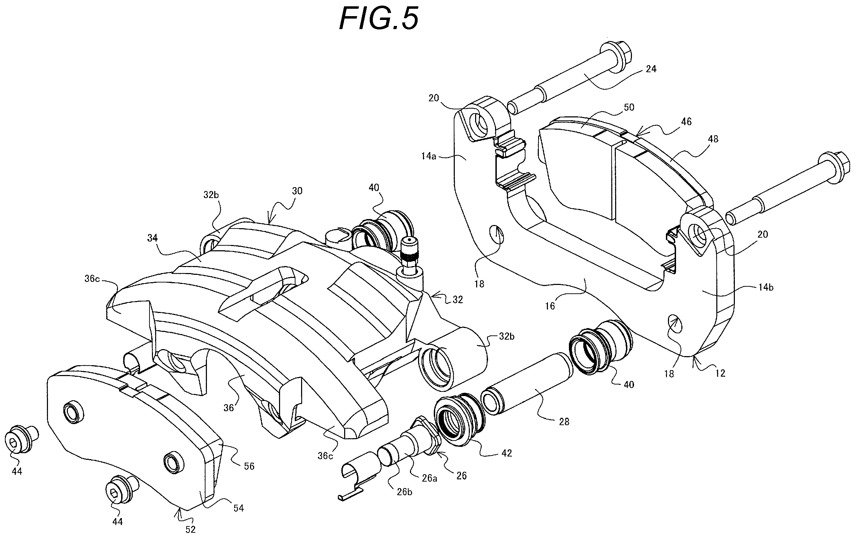

The support member 12 includes, at least, anchors 14a, 14b, a bridge 16, mounting holes 18 and slide member mounting portions 20 (refer to Fig. 5). The anchors 14a, 14b are disposed on a rotating rotor entrance side and a rotating rotor exit side of the support member 12, respectively, where a rotor 60 enters and exits when it rotates. In this embodiment, the anchors 14a, 14b support an inner pad 46 and function as torque bearing portions which bear force which attempts to rotate the inner pad 46 together with the rotor 60 when the brakes are applied. The inner pad 46 is made up of a pressure plate 48 which is made of a sheet of steel and a lining 50 which is a frictional member. The inner pad 46 is supported on the support member 12 via part of the pressure plate 48.

The bridge 16 is a connecting member which connects together the anchor 14a which is disposed on the rotating rotor entrance side and the anchor 14b which is disposed on the rotating rotor exit side of the support member 12 where the rotor 60 enters and exits when it rotates. The mounting holes 18 are holes which are provided in connecting portions between the anchors 14a, 14b and the bridge 16 for passage of bolts (not shown) which are screwed into mounting holes (not shown) provided on the vehicle body to thereby fasten the support member 12 to the vehicle body.

The slide member mounting portions 20 are through holes which are provided at distal ends of the pair of anchors 14a, 14b in positions which lie further radially outwards than an outer circumference of the rotor 60 when the rotor 60 is assembled to the disc brake apparatus 10. The slide members 22 are mounted in the corresponding slide member mounting portions 20, and torque caused in an outer pad 52, which will be described in detail later, is transmitted to the slide members 22.

The slide members 22 according to this embodiment are each made up of a guide pin 24 which makes up an inner slide portion which is situated on an inner side of the support member 12 and an anchor pin 26 which makes up an outer slide portion which is situated on an outer side of the support member 12. In this embodiment, a sleeve 28 (refer to Fig. 5), which makes up the inner slide portion, is disposed on an outer circumference of the guide pin 24. In addition, the caliper 30, which will be described in detail later, is configured so as to slide along an outer circumference of the sleeve 28. The anchor pin 26 includes a small diameter portion 26a and a large diameter portion 26b which are disposed in the order from a proximal end portion to a distal end portion of the anchor pin 26. The large diameter portion 26b functions as the outer slide portion. As a result of the anchor pin 26 including the large diameter portion 26b and the outer diameter portion 26b configured to function as the outer slide portion, even in the event that the outer pad 52, which will be described in detail later, wears, a distance from a contact portion (including a contact length and a contact position) with an outer transmission surface 36d to the support member 12 can be maintained constant. This can stabilize the application of braking torque applied when the brakes are applied.

In this embodiment, the guide pin 24 and the anchor pin 26 are separate members. Then, a proximal end side internally threaded portion 26c of the anchor pin 26 is screwed on a proximal end side externally threaded portion 24a of the guide pin 24 which is inserted through the slide member mounting portion 20 provided in the support member 12, whereby the guide pin 24 and the anchor pin 26 are fixed to the support member 12 with the support member 12 held therebetween. By adopting this configuration, even when the support member 12 is formed thin, it is possible to ensure a sufficient assembling margin between the guide pin 24 and the anchor pin 26.

The caliper 30 according to this embodiment has the cylinder portion 32, the claw portion 36 and a back body portion 34 (a bridge) The cylinder portion 32 constitutes a drive source for the disc brake apparatus 10 according to this embodiment and a piston 38 and a cylinder 32a which accommodates the piston 38 and from which the piston 38 is caused to project. In addition, support portions 32b are provided on the cylinder portion 32, and the support portions 32b have through holes through which the guide pins 24 are inserted. The through holes in the support portions 32b are provided so as to be situated further radially outwards than the outer circumference of the rotor 60 with the caliper 30 assembled to the disc brake apparatus 10. The reason that the through holes are so formed is that the guide pins 24 which are inserted therethrough are situated further radially outwards than the outer circumference of the rotor 60 so as to avoid the interference of the guide pins 24 with the rotor 60,

An inner transmission surface 32c is provided on an inner circumferential surface of the through hole of each support portion 32b so as to transmit braking torque to the sleeve 28 (the guide pin 24 via the sleeve 28). Boots 40, 42 are provided on each support portion 32 which slides over the sleeve 28 so as to be aligned along a sliding direction, and an outer circumference (that is, a sliding surface) of the sleeve 28 are covered by these boots 40, 42. By adopting this configuration, the sliding surface can be kept from dust attempting to adhere thereto. The inner transmission surface 32c has a bore diameter which is determined so that the inner transmission surface 32 loosely fits on the outer circumference of the sleeve 28. Then, gaps A1, A2 are defined between the sleeve 28 and the inner transmission surface 32c due to thicknesses of boot fixing portions 40a, 42a, the sleeve 28 is located from the support portion 32b.

The claw portion 36 bears reaction force generated as a result of pressing force generated by the piston 38. A cutout portion 36a is provided in the claw portion 36 in a position which corresponds to a position on the cylinder portion 32 where the cylinder 32a is formed. This is because an inner circumference of the cylinder 32a of the cylinder portion 32 is worked by making use of the cutout portion 36a. Blocks (two blocks in this embodiment) which make up the claw portion 36 each have a through hole 36b through which a bolt 44 is inserted. The through hole 36b is desirably formed as a stepped hole which keeps a bolt head of the bolt 44 used for fastening from projecting to an exterior portion. The caliper 30 is disposed in a limited space defined between the rotor 60 and an inner wall of a wheel. Due to this, the interference of the caliper 30 with the wheel can be suppressed by reducing the number of projecting portions from the caliper 30, and the formation of a flat surface on the caliper 30 leads to an improvement in aesthetic appearance thereof.

The outer pad 52 is fastened to an inner side of the claw portion 36. Similar to the inner pad 46, the outer pad 52 is made up of a pressure plate 54 of a sheet of steel and a lining 56 which is formed of frictional material. Due to this, by fastening the outer pad 52 to the claw portion 36, not only can the rigidity of the claw portion 36 be enhanced, but also the claw portion 36 and the outer pad 52 can be treated as an integral part.

By fastening the outer pad 52 to the claw portion 36, the tangential force of the outer pad 52 is transmitted to the claw portion 36. Due to this, braking torque generated by the frictional force of the outer pad 52 is then transmitted to the anchor pins 26 and the guide pins 24 via the caliper 30.

Rear enclosing portions 36c for enclosing the distal end portions (the large diameter portions 26b) of the anchor pins 26 are provided in positions of the claw portion 36 which correspond to the support portions The enclosing portions 36c make up the outer transmission surfaces 36d which transmit braking torque generated by the frictional force of the outer pad 52 when the brakes are applied to the anchor pins 26. The enclosing portions 36c are each formed so as to cover an outer circumference of the anchor pin 26 over a range of 180 degrees or wider including a braking torque transmission point to the anchor pin 26. By enclosing the outer circumference of the anchor pin 26 over the range of 180 degrees or greater, a good holding performance of the caliper 30 can be maintained, while reducing the thickness of the portion which makes up the enclosing portion 36c. In order to mitigate the assembling and working accuracy at which the pair of anchor pins 26 are disposed, slight gaps B1, B2 are provided between the anchor pins 26 and the corresponding rear enclosing portions 36c when the brakes are not applied.

The enclosing portions 36c are provided so that the outer transmission surfaces 36d are situated further inboards (that is, closer to the rotor 60) than the pressure plate 54 of the outer pad 52. By adopting this configuration, when the braking torque is transmitted to the anchor pins 26, the braking torque is so transmitted more in the position situated inboards of the pressure plate 54 than transmitted directly from the pressure plate 54. Due to this, a distance from the support member 12 to the torque transmission point becomes short, whereby a load applied to the anchor pins 26 is reduced. Consequently, it is possible to suppress the deformation of the anchor pins 26 and the deflection of the support member 12.

The back body portion 34 is an element which straddles the rotor 60 in a position lying further radially outwards than the outer circumference thereof to connect the cylinder portion 32 and the claw portion 36.

In the disc brake apparatus 10 configured in the way described above, the caliper 30 is supported on the sleeves 28 which are disposed on the outer circumferences of the guide pins 24 via the boots 40, 42. In the case of this embodiment, when comparing the gaps A (A1, A2) with the gaps B (B1, B2), the gaps B are configured so as to be smaller than the gaps A. In the gaps A and the gaps B, the gaps (the gap A1, the gap B1) situated closer to a rotating rotor entrance side of the caliper 30 where the rotor 60 enters when it rotates are smaller than the gaps (the gap A2, the gap B2) situated closer to a rotating rotor exit side of the caliper 30 where the rotor 60 enters and exits when it rotates. Due to this, the relationship in terms of size of the gap A1 to the gap B2 can be described as B1<B2<A1<A2.

In the disc brake apparatus 10 configured in the way described above, the caliper 30 is supported via the boots 40, 42 which are provided on the guide pins 24 when the brakes are not applied. Then, when the brakes are applied, the caliper 30 bears the tangential force of the outer pad 52 and is then caused to slide in a rotational direction (R) of the rotor 60 to thereby be brought into contact with the slide members 22. Here, when the sizes of the gaps A1 to B2 are caused to differ, the number of transmission surfaces which come into contact with the slide members 22 changes in accordance to the magnitude of the braking torque.

Specifically, the number of transmission surfaces will change as follows. Firstly, in an initial stage of braking, the outer transmission surface 36d which is situated on the rotating rotor entrance side where the rotor 60 enters when it rotates is brought into contact with the anchor pin 26 (whereby the gap B1 is eliminated). When the braking torque is applied further, the outer transmission surface 36d which is situated on the rotating rotor exit side where the rotor 60 exits when it rotates is brought into contact with the anchor pin 26 (whereby the gap B2 is eliminated).

Then, when the braking toque applied becomes greater, the inner transmission surface 32c which is situated on the rotating rotor entrance side is brought into contact with the guide pin 24 (the sleeve 28) (whereby the gap A1 is eliminated). When the braking torque applied becomes far greater, the inner transmission surface 32c on the rotating rotor exist side is brought into contact with the guide pin 24 (the sleeve 28) (whereby the gap A2 is eliminated).Thus, all the four transmission surfaces are brought into function.

In the disc brake apparatus 10 of this embodiment, the anchor pins 26 which make up the outer slide portions and the guide pins 24 which make up the inner slide portions are disposed on the outer side and the inner side of the support member 12, respectively. Namely, the braking torque is designed to be inputted in a dispersed fashion in accordance to the magnitude of the tangential force applied to the outer pad 52. Due to this, even in the event that great tangential force is applied to the outer pad 52, there are no fears that the anchor pins 26 are deformed.

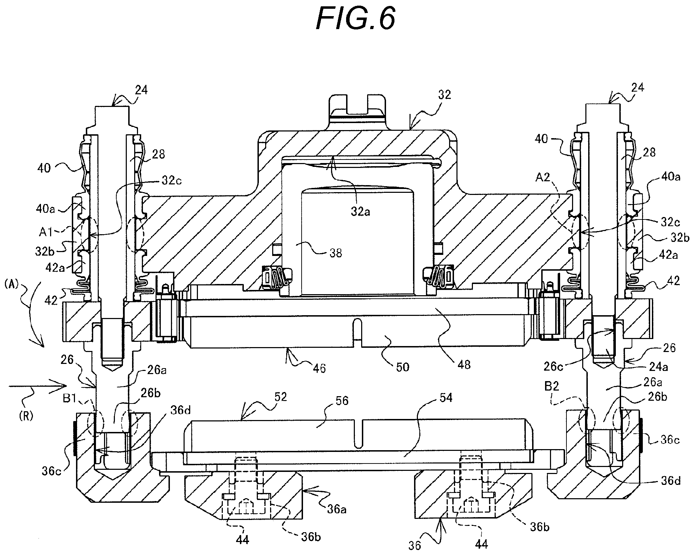

Since the configuration is adopted in which the braking force is dispersed to the anchor pins 26 which are provided on the outer side of the support member 12 and the guide pins 24 which are provided on the inner side of the support member 12, torsional force indicated by an arrow (A) in Fig. 6 is mitigated, thereby making it possible to suppress the distortion of the support member 12.

Consequently, it is possible to prevent the occurrence of a tilting phenomenon of the caliper 30 attributed to the deformation of the anchor pins 26 and the support member 12. Thus, it is also possible to suppress the occurrence of eccentric wear of the pads (the inner pad 46 and the outer pad 52) which would otherwise be caused by the tilting phenomenon of the caliper 30.

In the figures, as a preferred mode for carrying out the invention, one of the specific modes is illustrated. However, provided that the working effects described above can be obtained, there is imposed no limitation to the external appearances or forms and materials of the support member 12 and the caliper 30.

In the embodiment, the relationship in terms of size of the gaps A1 to B2 is described as B1<B2<A1<A2. However, the relationship can be set differently depending upon whether the anchoring of the tangential force or the braking torque when the brakes are applied is triggered by the push anchor or the pull anchor. For example, even through the relationship in terms of size of the gaps is set as B2<B1 <A2<A1, the setting can be regarded as constituting part of the invention.

In the disc brake apparatus 10 according to this embodiment, when the brakes are applied, the caliper 30 slides in the rotational direction (R) of the rotor 60. Due to this, in the event that the magnitude of the gaps A (A1, A2) is made equal to the magnitude of the gaps B (B1, B2), the inner transmission surfaces 32c and the outer transmission surfaces 36d are brought into contact with the guide pins 24 and the anchor pins 26 at the same time. Even in the event that this configuration is adopted, the configuration can be regarded as constituting part of the invention.

In the embodiment, the outer pad 52 is described as being fixed to the claw portion 36 with the bolts 44. However, other fastening means than the means using the bolts 44 may be adopted including a fitting making use of irregularities, as long as a configuration adopted can transmit the tangential force applied to the outer pad 52 to the claw portion 36.

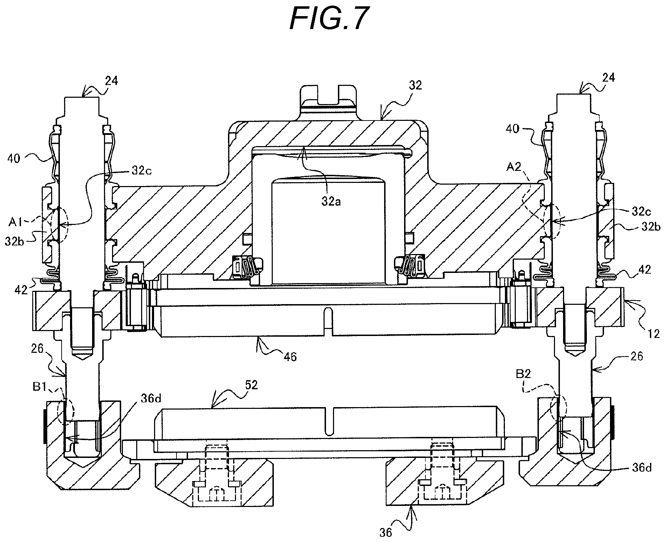

Next, referring to Fig. 7, a first modified example made to the disc brake apparatus according to the invention will be described, Fig. 7 is a sectional view showing a configuration corresponding to the configuration of the embodiment shown in Fig. 6. In the embodiment described above, the sleeves 28 (refer to Fig. 6) are provided on the outer circumferences of the guide pins 24 which make up the inner slide portions. In contrast with this, the following configuration is adopted in this modified example. The sleeves 28 are deleted, and guide pins 24 having a larger diameter are used instead. Then, support portions 32b slide over outer circumferences of the guide pins 24, and inner transmission surfaces 32c are brought into contact with the outer circumferences of the guide pins 24.

Even in the event that the inner slide portions are configured in the way described above, similar advantageous effects to those of the embodiment can be obtained. In addition, since the sleeves 28 can be deleted, the number of parts needed to be assembled and the number of assembling steps can be reduced accordingly.

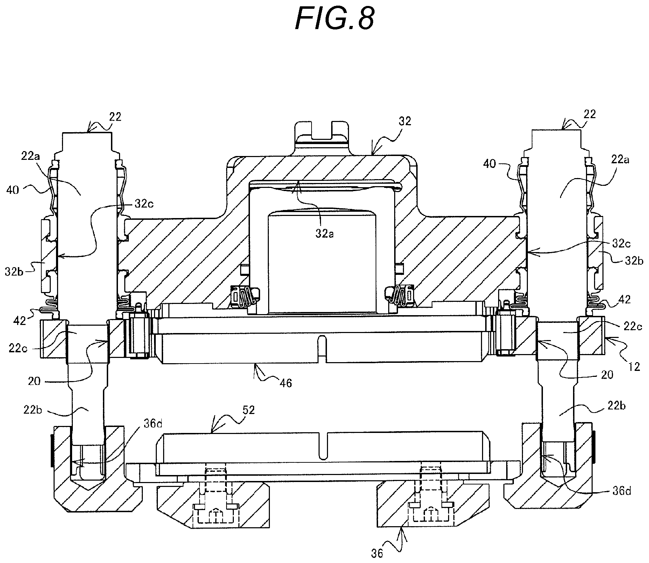

Next, referring to Fig. 8, a second modified example will be described. In the modified example shown in Fig. 8, an inner slide portion and an outer slide portion are formed into an integral slide member 22.

In the case of this modified example, the slide member 22 is screwed into a support member 12 for assemblage to the support member 12. Due to this, an internal thread is formed on a slide member mounting portion 20 of the support member 12. In addition, an externally threaded portion 22c is provided on the slide member 22 between a guide pin constituting portion 22a which constitutes the inner slide portion and an anchor pin constituting portion 22b which constitutes the outer slide portion.

In the slide member 22 configured as described above, a proximal end face of the guide pin constituting portion 22a constitutes a reference point for use in determining the length of an anchor pin 26. Due to this, a proximal end portion of the guide pin constituting portion 22a is formed greater in diameter than an internally threaded hole in the slide member mounting portion 20, and the proximal end face thereof is configured to be brought into abutment with a planar plane of the support member 12.

Even in the event that the slide member 22 is formed in this way, a similar advantageous effects to those of the embodiment can be obtained. In addition, since the guide pin constituting portion 22a and the anchor pin constituting portion 22b are formed integral, the number of parts needed to be assembled and the number of assembling steps can be reduced.

Here, the characteristics of the embodiment of the disc brake apparatus according to the invention will be briefly summarized by item by item below.
[1] A disc brake apparatus having:
   a support member;
   a slide member disposed along an axial direction of a rotor and having an inner slide portion on an inner side of the support member and an outer slide portion on an outer side of the support member; and
   a caliper which is held so that tangential force of an outer pad is transmitted to a claw portion and which is supported on the slide member,
   wherein the caliper includes:
      an outer transmission surface which transmits braking torque generated in the outer pad to the outer slide portion; and
      an inner transmission surface which transmits the braking torque to the inner slide portion.
[2] The disc brake apparatus configured as described under [1] above, wherein
   the slide member is made up of the inner slide portion and the outer slide portion which are separate members, and wherein
   the constituent member of the inner slide portion and the constituent member of the outer slide portion are fastened together with the support member held therebetween.
[3] The disc brake apparatus configured as described under [1] or [2] above, wherein
   the outer slide portion is made up, of the large diameter portion and the small diameter portion which are provided along the axial direction of the slide member, of the large diameter portion.
[4] The disc brake apparatus configured as described under any one of [1] to [3] above, wherein
   the caliper is allowed to slide in the axial direction of the rotor via the inner slide portion, and wherein
   the inner slide portion has the sleeve which is interposed between the sliding portion of the caliper and the inner slide portion.
[5] The disc brake apparatus configured as described under any one of [1] to [4] above, wherein
   the first gap is provided between the outer slide portion and the outer transmission surface, wherein
   the second gap is provided between the inner slide portion and the inner transmission surface, and wherein
   the second gap is set to be wider than the first gap.
[6] The disc brake apparatus configured as described under any one of [1] to [5] above, wherein
   the first gap is provided between the outer slide portion and the outer transmission surface, wherein
   the second gap is provided between the inner slide portion and the inner transmission surface, and wherein
   in each of the first gap and the second gap, the gap situated on the exit side of the caliper where the rotor exits when it rotates is set to be wider than the gap situated on the entrance side where the rotor enters when it rotates.
[7] The disc brake apparatus configured as described under any one of [1] to [6] above, wherein
   the outer transmission surface is the enclosing portion which encloses the outer circumference of the outer slide portion, and wherein
   the enclosing portion encloses the outer circumference of the outer slide portion over the range of 180 degrees or greater including the braking torque transmission point to the outer slide portion.
[8] The disc brake apparatus configured as described under any one of [1] to [7] above, wherein the outer pad is fastened to the claw portion.

The disc brake apparatus of the invention is not limited to the embodiment described heretofore and hence can be modified or improved as required. In addition, the materials, shapes, dimensions, numbers, arranging positions and the like of the constituent elements of the embodiment are arbitrary and are not limited thereto, provided that the invention can be attained by those constituent elements.

This patent application is based on Japanese Patent Application (No. 2014-233810) filed on November 18, 2014, the contents of which are incorporated herein by reference.

### [Industrial Applicability]

According to the disc brake apparatus of the invention, even in the event that the configuration of the support member is simplified and that the torque bearing construction is adopted in which the braking torque is borne by the pins, it is possible to prevent the deformation of the pins and the support member. Thus, it is also possible to suppress the occurrence of eccentric wear that would otherwise be caused by the deformed pins or support member.

### [Description of Reference Numerals and Signs]

10: disc brake apparatus; 12: support member; 14a: anchor; 14b: anchor; 16: bridge; 18: mounting hole; 20: slide portion mounting portion; 22: slide member; 22a: guide pin constituting portion; 22b: anchor pin constituting portion; 22c: externally threaded portion; 24: guide pin; 24a: proximal end side externally threaded portion; 26: anchor pin; 26a: small diameter portion; 26b: large diameter portion; 28: sleeve; 30: caliper; 32: cylinder portion; 32a: cylinder; 32b: support portion; 32c: inner transmission surface; 34: back body portion; 36: claw portion; 36a: cutout portion; 36b: through hole; 36c: rear enclosing portion; 36d: outer transmission surface; 38: piston; 40: boot; 40a: boot fixing portion; 42: boot; 42a: boot fixing portion; 44: bolt; 46: inner pad; 48: pressure plate; 50: lining; 52: outer pad; 54: pressure plate; 56: lining; 60: rotor.

## Claims

1. A disc brake apparatus comprising:
a support member;
a slide member disposed along an axial direction of a rotor and having an inner slide portion on an inner side of the support member and an outer slide portion on an outer side of the support member; and
a caliper which is held so that tangential force of an outer pad is transmitted to a claw portion and which is supported on the slide member,
wherein the caliper includes:
an outer transmission surface which transmits braking torque generated in the outer pad to the outer slide portion; and
an inner transmission surface which transmits the braking torque to the inner slide portion.

2. The disc brake apparatus according to Claim 1, wherein, in the slide member, the inner slide portion and the outer slide portion are structured as separate members, and
wherein a constituent member of the inner slide portion and a constituent member of the outer slide portion are fastened together with the support member held therebetween.

3. The disc brake apparatus according to Claim 1 or 2, wherein the outer slide portion is made up of a large diameter portion of the large diameter portion and a small diameter portion which are provided along an axial direction of the slide member.

4. The disc brake apparatus according to any one of Claims 1 to 3, wherein the caliper is slidable in the axial direction of the rotor via the inner slide portion, and
wherein a sleeve which is interposed between a sliding portion of the caliper and the inner slide portion.

5. The disc brake apparatus according to any one of Claims 1 to 4, wherein a first gap is provided between the outer slide portion and the outer transmission surface,
wherein a second gap is provided between the inner slide portion and the inner transmission surface, and
wherein the second gap is set to be larger than the first gap.

6. The disc brake apparatus according to any one of Claims 1 to 5, wherein a first gap is provided between the outer slide portion and the outer transmission surface,
wherein a second gap is provided between the inner slide portion and the inner transmission surface, and
wherein, in each of the first gap and the second gap, a gap on an exit side of the caliper where the rotor exits when the rotor rotates is set to be larger than a gap on an entrance side where the rotor enters when the rotor rotates.

7. The disc brake apparatus according to any one of Claims 1 to 6, wherein the outer transmission surface is an enclosing portion which encloses an outer circumference of the outer slide portion, and
wherein the enclosing portion encloses the outer circumference of the outer slide portion over a range of 180 degrees or greater including a braking torque transmission point to the outer slide portion.

8. The disc brake apparatus according to any one of Claims 1 to 7, wherein the outer pad is fastened to the claw portion.
